# EUROPÄISCHE PATENTSCHRIFT

(11) **EP 2 047 331 B1**
(45) Veröffentlichungstag und Bekanntmachung des Hinweises auf die Patenterteilung: **11.07.2012**
(21) Anmeldenummer: 07711240.7
(22) Anmeldetag: 15.03.2007
(51) Int. Cl.: G03B 17/56

(54) **KAMERAFÜHRUNGSVORRICHTUNG**
CAMERA GUIDING DEVICE
DISPOSITIF DE GUIDAGE DE CAMÉRA

(30) Priorität: 01.08.2006 DE 102006036126
(43) Veröffentlichungstag der Anmeldung: 15.04.2009
(73) Patentinhaber: Foddis, Ulisse, 89281 Altenstadt/Iller (DE)
(72) Erfinder: Foddis, Ulisse, 89281 Altenstadt/Iller (DE)
(74) Vertreter: Meyer, Thorsten
(86) Internationale Anmeldenummer: PCT/DE2007/000489
(87) Internationale Veröffentlichungsnummer: WO 2008/014732

(56) Entgegenhaltungen:
- EP-A1- 0 449 657
- WO-A-02/065206
- CH-A- 558 545
- FR-A1- 2 793 870
- US-A- 3 650 195
- US-A- 4 272 177
- US-A- 5 721 997
- US-A1- 2002 168 189

## Beschreibung

Die Erfindung betrifft eine Kameraführungsvorrichtung, insbesondere für einen Camcorder oder eine Digitalkamera, mit einer Kamera-Halteplattform zur Unterstützung der darauf befestigbaren Kamera, mit wenigstens einem von der Kamera-Halteplattform wegragenden Horizontal-Element und wenigstens einem von diesem aufragenden Vertikal-Element mit einer Handhabe zum Führen des Kameraführungsvorrichtung, wobei die Handhabe an dem Vertikal-Element direkt oder über ein weiteres Horizontal-Element verbunden ist.

Moderne Kameras folgen dem Trend nach Miniaturisierung und die Verwendung möglichst leichter Materialien. Dies führt dazu, dass Kameras, insbesondere sog. Camcorder oder Digitalkameras so klein und leicht geworden sind, dass diese nicht mehr leicht im Raum führbar sind, da kaum noch Platz am Gehäuse für ein Umgreifen oder ein Handling für eine verwacklungsfreie Kameraführung unter Konzentrierung auf das Motiv mehr möglich ist.

Aus der US 5,721,997 A ist eine Kamerahandhabe bekannt, die eine eine Kamera tragende Basis aufweist, an der ein davon aufregendes Element vorgesehen ist, an dessen Ende ein quer zur Basis ausgerichteter Griff vorgesehen ist. Nachteilig hierbei ist, dass die Kamerahandhabe nicht auf verschiedene Typen von Kameras einstellbar ist.

Aus der CH 558 545 A ist eine Schnellschussvorrichtung an einer Kamera bekannt, durch welche über einer Kamera ein Handgriff angeordnet ist, der eine unmittelbare Nähe zum Auslöseknopf bietet. Dabei ist der Handgriff in Richtung der Kameraachse orientiert.

Aus der EP 449 657 A ist ein C-förmig ausgestalteter Tragegriff für eine Videokamera bekannt, bei dem oberhalb der Videokamera ein Griffabschnitt in Richtung der Kameraachse angeordnet ist.

Aufgabe der Erfindung ist es eine Kameraführungsvorrichtung zur Verfügung zu stellen, die eine verbesserte Handhabung einer Kamera, insbesondere eines Camcorder oder einer Digitalkamera, ermöglicht.

Diese Aufgabe wird durch eine Kameraführungsvorrichtung nach den Merkmalen des Anspruchs 1 gelöst.

Erfindungsgemäß ist eine Kameraführungsvorrichtung, insbesondere für einen Camcorder oder eine Digitalkamera, vorgeschlagen mit einer Kamera-Halteplattform zur Unterstützung einer darauf befestigbaren Kamera, wobei ein Befestigungsmittel zur Zusammenwirkung mit einem entsprechenden Gegenstück an der Kamera an einem Befestigungspunkt an oder auf der Kamera-Halteplattform vorgesehen ist, mit einem von der Kamera-Halteplattform wegragenden Horizontal-Element, wobei die Kamera-Halteplattform an dem Horizontal-Element entlang desselben zur Anpassung an verschiedene Geometrien und/oder Schwerpunkte von zu montierenden Kameras verschieblich und an diesem festlegbar gelagert ist, wobei eine Handhabe zum Führen der Kameraführungsvorrichtung vorgesehen ist, wobei von diesem Horizontal-Element zwei Vertikal-Elemente aufragen, wobei ein weiteres Horizontal-Element vorgesehen ist, dass beide Vertikal-Elemente miteinander verbindet, wobei eine Handhabe mittig an dem weiteren Horizontal-Element vorgesehen ist. Hierdurch befindet sich die Kamera optimal im Schwerpunkt direkt unter der Handhabe, was eine sichere Führung erlaubt. Dem folgend kann ein Langloch vorgesehen sein, dass mit einer lösbaren Befestigung zusammenwirkt. Weiterhin ist vorgesehen, dass ein Befestigungsmittel oder ein Eingriff für ein solches zur Zusammenwirkung mit einem entsprechenden Gegenstück an der Kamera an einem Befestigungspunkt an oder auf der Kamera-Halteplattform vorgesehen ist. Hierdurch ist eine sichere reversible Montage der Kamera an der Kamera-Halteplattform möglich. Die Handhabe ist dabei über dem Befestigungspunkt des Befestigungsmittels an der Kamera-Halteplattform angeordnet.

Durch die Handhabe ist Bewegung der an der Kamera-Halteplattform montierten Kamera mit wackelfreier dynamischer Bewegung möglich, ohne dass Ablenkung durch zu vermeidendes versehentliches Drücken von Tasten an der Kamera zu befürchten ist. An den Horizontal- und Vertikal-Elemente kann die Kameraführungsvorrichtung ebenfalls sicher angefasst werden, was verschiedene Einstellpositionen ermöglicht.

Nach einer weiteren bevorzugten Ausgestaltung der Erfindung verläuft die Handhabe im wesentlichen parallel zu der insbesondere eben ausgebildeten Kamera-Halteplattform.

Nach einer weiteren Ausgestaltung der Erfindung ist vorgesehen, dass die Handhabe mittig über dem Befestigungspunkt des Befestigungsmittels an der Kamera-Halteplattform angeordnet ist. Hierdurch befindet sich die Kamera optimal im Schwerpunkt direkt unter der Handhabe, was eine sichere Führung erlaubt.

Von Vorteil sind zwei von der Kamera-Halteplattform gegenüberliegend wegragende Horizontal-Elemente vorgesehen, wobei jeweils von diesen ein Vertikal-Element aufragt, wobei ein weiteres Horizontal-Element vorgesehen ist, dass beide Vertikal-Elemente miteinander verbindet, wobei die Handhabe mittig an dem Horizontal-Element vorgesehen ist.

Vorteilhafterweise ist das Befestigungsmittel im oder unterhalb des Schwerpunkts der Kamera angeordnet.

Das Vertikal-Element ist zum Halten der Kameraführungsvorrichtung von Vorteil durch Griffmulden oder einen elastischen Bezug ausgestaltet.

Bevorzugterweise ist an dem weiteren Horizontal-Element wenigstens eine Gerätehalterung, insbesondere ein Blitzschuh vorgesehen.

Insbesondere an der Unterseite der Kamera-Halteplattform ist nach einer weiteren Ausgestaltung der Erfindung ein Stativ-Befestigungsmittel oder ein Eingriff für ein solches zur Zusammenwirkung mit einem Stativ vorgesehen.

Zum Schutz der Kamera und zur Zurverfügungstellung möglichst vieler Griffmöglichkeiten ist von Vorteil vorgesehen, dass das/die Horizontal-Element(e), das/die Vertikal-Element(e) und das weitere Horizontal-Element einen Rahmen um eine auf der Kamera-Halteplattform montierte Kamera herum bilden. Nach einer besonders bevorzugten Weiterbildung der Erfindung ist eine Seiten-Handhabe vorgesehen, welche an dem Vertikal-Element verbunden ist, wobei die Seiten-Handhabe im wesentlichen senkrecht zu der Kamera-Halteplattform verläuft.

Von Vorteil ist die Seiten-Handhabe über ein feststellbares Gelenk in einer Ebene verschwenkbar, zu der die Kamera-Halteplattform im wesentlichen senkrecht verläuft.

Das Befestigungsmittel ist nach einer Weiterbildung der Erfindung entlang des Kamera-Halteplattform insbesondere in einem an dieser ausgebildeten Langloch verschieblich geführt, wobei insbesondere das Befestigungsmittel bei Zusammenwirkung mit dem entsprechenden Gegenstück an der Kamera dieses in seiner Position im Langloch festlegt.

Nach einer weiteren vorteilhaften Ausgestaltung der Erfindung ist eine abnehmbare Pistolen-Handhabe vorgesehen, die an der der Kamera abgewandten Seite der Kamera-Halteplattform oder des Horizontal-Elements befestigbar ist.

Ein Zubehörschuh ist von Vorteil an einem Horizontal-Element vorgesehen, an dem insbesondere eine Beleuchtungsvorrichtung befestigt werden kann. Beleuchtungsvorrichtungen umfasst dabei im Sinne der Erfindung alle Arten von Geräten, die als Zubehör von Kameras oder Camcordern verwendbar sind.

Nachfolgend wird die Erfindung anhand der Zeichnungen weiter erläutert. Im Einzelnen zeigt die schematische Darstellung in:
- Fig. 1: eine schematische Aufsicht auf eine erfindungsgemäße Kameraführungsvorrichtung von schräg oben,
- Fig. 2: eine schematische Ansicht von vorne auf die Kameraführungsvorrichtung aus Fig. 1,
- Fig. 3: eine schematische Seitenansicht der Kameraführungsvorrichtung aus Fig. 1,
- Fig. 4: eine schematische Ansicht von oben auf die Kameraführungsvorrichtung aus Fig. 1,
- Fig. 5: eine schematische Aufsicht von schräg oben auf die erfindungsgemäße Kameraführungsvorrichtung aus Fig. 1 mit einer darin montierten Videokamera,
- Fig. 6: eine schematische Ansicht von vorne auf die Kameraführungsvorrichtung aus Fig. 5,
- Fig. 7: eine schematische Seitenansicht der Kameraführungsvorrichtung aus Fig. 5,
- Fig. 8: eine schematische Ansicht von oben auf die Kameraführungsvorrichtung aus Fig. 5,
- Fig. 9: eine schematische Aufsicht von schräg oben auf eine Kameraführungsvorrichtung mit einer darin montierten Videokamera,
- Fig. 10: eine schematische Seitenansicht der Kameraführungsvorrichtung aus Fig. 9,
- Fig. 11: eine schematische Ansicht von vorne auf die Kameraführungsvorrichtung aus Fig. 9,
- Fig. 12: eine schematische Ansicht von vorne auf eine weitere Ausführungsform einer Kameraführungsvorrichtung mit einer zusätzlichen Seiten-Handhabe,
- Fig. 13: eine schematische Ansicht auf die Kameraführungsvorrichtung aus Fig. 12 mit eingeklappter Seiten-Handhabe,
- Fig. 14: eine schematische Ansicht von schräg oben auf die Kameraführungsvorrichtung aus Fig. 12,
- Fig. 15: eine schematische Aufsicht von hinten auf die Kameraführungsvorrichtung aus Fig. 12 mit daran montierten Videokamera und Pistolen-Handhabe, und
- Fig. 16: eine schematische Aufsicht von vorne auf die Kameraführungsvorrichtung aus Fig. 15.

Die in den Figuren gleichen Bezugsziffern bezeichnen gleiche oder gleich wirkende Elemente.

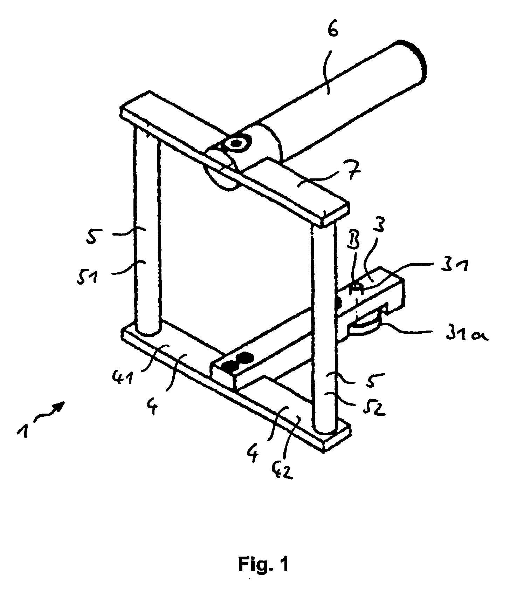

Fig. 1 zeigt eine schematische Ansicht einer erfindungsgemä-Ben Kameraführungsvorrichtung 1. Durch eine normierte Schraube als Befestigungsmittel 31 an einem Befestigungspunkt B an der zur Unterstützung der darauf befestigbaren Kamera vorgesehenen Kamera-Halteplattform 3 kann die Kameraführungsvorrichtung alle gängigen Camcorder oder Digitalkameras sowie klassische Filmkameras aufnehmen. Zum Lösen und Festzeihen der mit einem Gewinde an einer Kamera zusammenwirkenden Schraube ist ein Rändelrad 31a vorgesehen.

Von der Kamera-Halteplattform 3 ragen gegenüberliegend zwei Horizontal-Elemente 4 (41 und 42) weg. An den Enden dieser sind jeweils von diesen aufragende Vertikal-Elemente 5 (51 und 52) vorgesehen, die ein weiteres Horizontal-Element 7 tragen, an dem eine Handhabe 6 mittig über dem Befestigungspunkt B des Befestigungsmittels 31 angeordnet ist. Die Handhabe 6 verläuft dabei im wesentlichen parallel zu der Kamera-Halteplattform 3.

Die Vertikal-Elemente 5 können zum Halten der Kameraführungsvorrichtung 1 mit Griffmulden oder einen elastischen Bezug versehen sein.

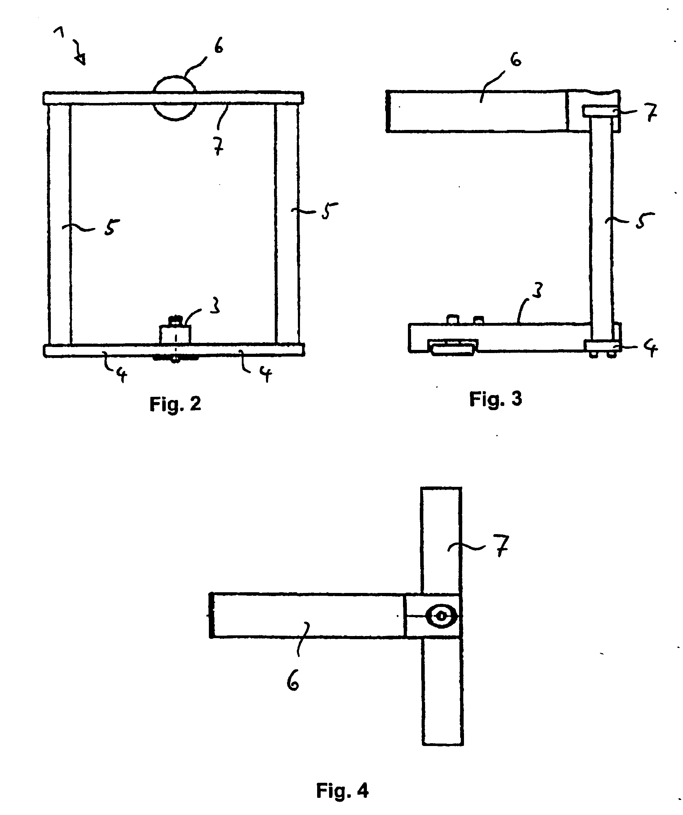

Die Fig. 2 bis Fig. 4 zeigen die Kameraführungsvorrichtung von vorne, von der Seite und von oben.

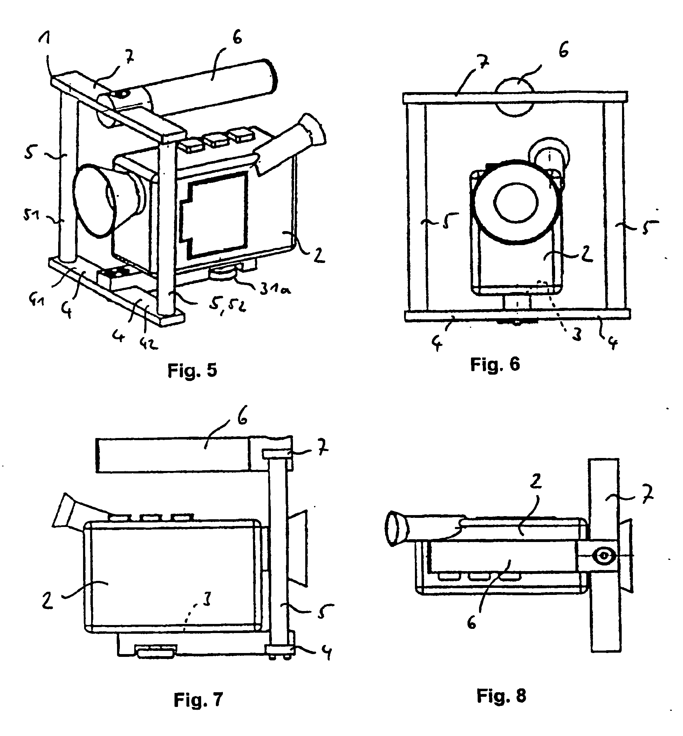

In den Fig. 5 bis Fig. 8 ist ein in der Kameraführungsvorrichtung 1 auf der Kamera-Halteplattform 3 montierter Camcorder 2 in verschiedenen Blickrichtungen gezeigt.

An der Kameraführungsvorrichtung 1 können einer oder mehrere sog. Blitzschuhe insbesondere an dem weiteren Horizontal-Element 7 vorgesehen sein.

Vorteilhaft ist auch, falls ein abnehmbarer Bildschirm an der Kamera vorhanden ist, diesen an einem an der Kameraführungsvorrichtung vorgesehenen Befestigungsmittel befestigen zu können, um eine bessere Einsehbarkeit desselben zu gewährleisten.

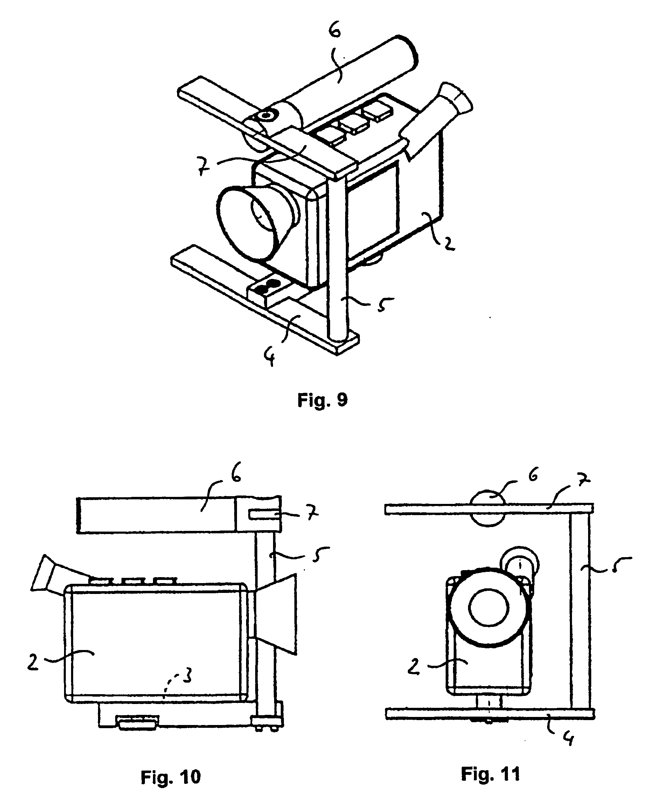

In Fig. 9 ist eine Kameraführungsvorrichtung 1 gezeigt, bei der nur ein Vertikal-Element 5 vorhanden ist.

Zu Ausgleich des Schwerpunkts kann in dieser oder der Variante mit zwei Vertikal-Elementen vorgesehen sein, variable Gewichte vorzusehen, um einen optimales In-der-Hand-liegen der Kameraführungsvorrichtung zu ermöglichen.

Die Fig. 10 zeigt eine Ansicht der Variante der Kameraführungsvorrichtung aus Fig. 9 in einer Seitenansicht und Fig. 11 schließlich in einer Ansicht von vorne.

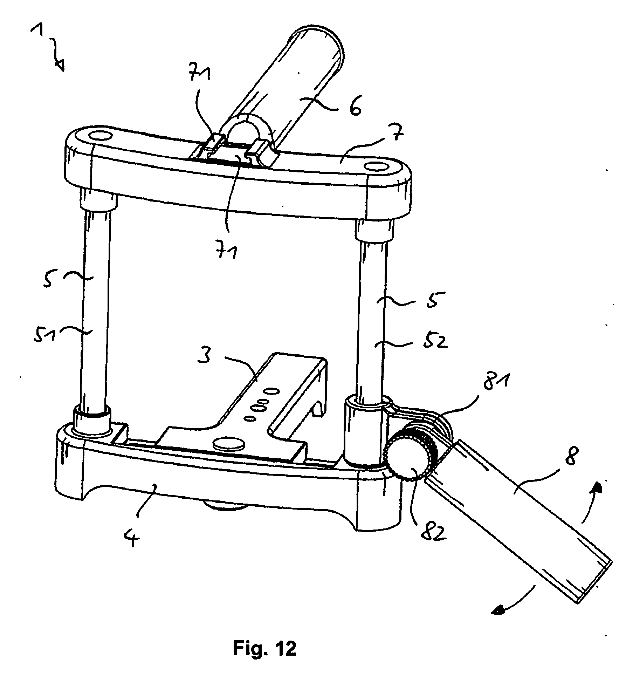

Fig. 12 zeigt eine weitere Ausführungsform der Erfindung, wobei die gezeigte Kameraführungsvorrichtung 1 mit einer zusätzlichen Seiten-Handhabe 8 versehen ist.

Zusätzlich ist noch ein an einem Horizontal-Element 7 ein Zubehörschuh 71 vorgesehen, an dem beispielsweise ein Blitz als zusätzliche Beleuchtungsvorrichtung befestigt werden kann. Zubehörschuh ist dabei als Vorrichtung zu verstehen, an die Zubehöre wie externe Blitzgeräte, Lampen, Sucher oder Wasserwagen mittels eines speziellen Sockels/ Fußes angesteckt werden können.

Die Seiten-Handhabe 8 vorgesehen ist mit dem Vertikal-Element 5 verbunden und verläuft im wesentlichen senkrecht zu der Kamera-Halteplattform 3.

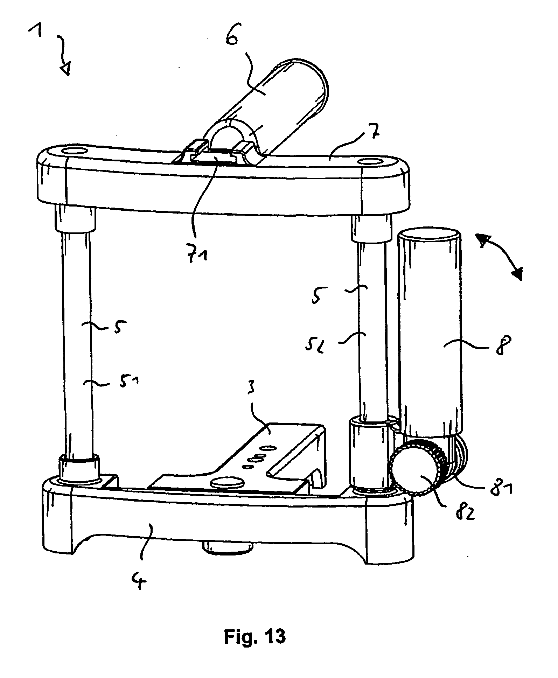

Die Seiten-Handhabe 8 ist zur optimalen Einstellung verschwenkbar ausgeführt und hierzu über ein festlegbares Gelenk 81 mit dem Vertikal-Element 52 verbundnen. Im gezeigten Beispiel ist die Seiten-Handhabe in einer Ebene verschwenkbar, zu der die Kamera-Halteplattform 3 im wesentlichen senkrecht verläuft, siehe hierzu auch Fig. 13, in der die Seiten-Handhabe in einer anderen Position mittels einer das Gelenk 81 sperrenden Feststellschraube 82 festgelegt ist.

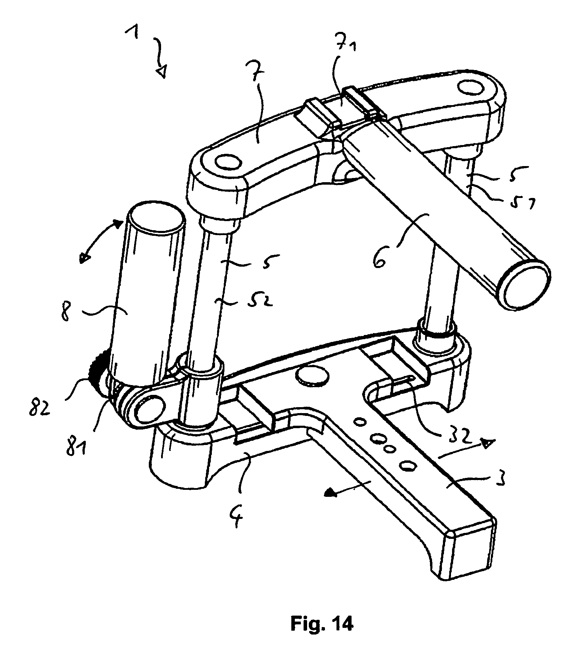

Fig. 14 zeigt die Ausführungsform der Fig. 12 und 13 aus einer Perspektive von schräg oben. In dieser Position ist das weitere Merkmal der Ausführungsform ersichtlich, nachdem die Kamera-Halteplattform 3 an dem Horizontal-Element 4 entlang desselben verschieblich und an diesem festlegbar gelagert ist. Hierzu ist ein Langloch mit Feststellschraube vorgesehen.

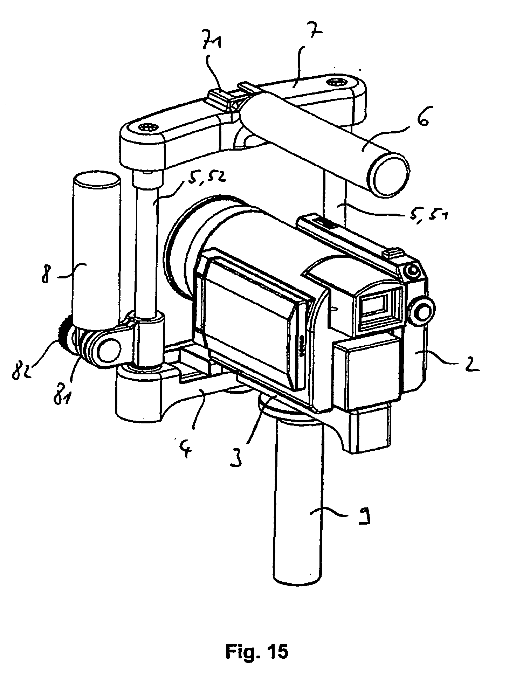

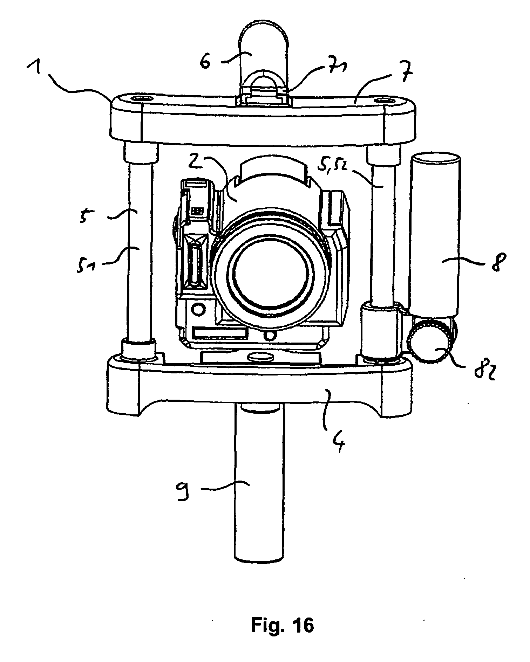

Die Fig. 15 und 16 zeigen die Ausführungsform der Fig. 12 bis 14 mit daran montiertem Camcorder 2 aus einer Ansicht von vorne (Fig. 15) und von hinten (Fig. 16).

Gezeigt ist dabei eine montierte, abnehmbare Pistolen-Handhabe 9, die an der der Kamera abgewandten Seite der Kamera-Halteplattform 3 befestigt ist. Hierdurch ist eine weitere Verbesserung der Handhabung durch eine weitere Griffmöglichkeit gegeben.

### Bezugszeichenliste

- 1: Kameraführungsvorrichtung
- 2: Camcorder

- 3: Kamera-Halteplattform
- 31: Befestigungsmittel
- 31a: Rändelrad
- 32: Langloch

- 4: Horizontal-Element
- 41: Horizontal-Element
- 42: Horizontal-Element

- 5: Vertikal-Element
- 51: Vertikal-Element
- 52: Vertikal-Element

- 6: Handhabe
- 7: Horizontal-Element
- 71: Zubehörschuh

- 8: Seiten-Handhabe
- 81: Gelenk
- 82: Feststellschraube

- 9: Pistolen-Handhabe

- B: Befestigungspunkt

## Patentansprüche

1. Kameraführungsvorrichtung (1), insbesondere für einen Camcorder (2) oder eine Digitalkamera,
mit einer Kamera-Halteplattform (3) zur Unterstützung einer darauf befestigbaren Kamera,
wobei ein Befestigungsmittel (31) zur Zusammenwirkung mit einem entsprechenden Gegenstück an der Kamera an einem Befestigungspunkt (B) an oder auf der Kamera-Halteplattform (3) vorgesehen ist,
mit einem von der Kamera-Halteplattform (3) wegragenden Horizontal-Element (4, 41, 42),
wobei die Kamera-Halteplattform (3) an dem Horizontal-Element (4) entlang desselben zur Anpassung an verschiedene Geometrien und/oder Schwerpunkte von zu montierenden Kameras verschieblich und an diesem festlegbar gelagert ist,
wobei eine Handhabe (6) zum Führen der Kameraführungsvorrichtung vorgesehen ist,
wobei von diesem Horizontal-Element (4, 41, 42) zwei Vertikal-Elemente (5, 51, 52) aufragen,
wobei ein weiteres Horizontal-Element (7) vorgesehen ist, das beide Vertikal-Elemente (51, 52) miteinander verbindet, wobei eine Handhabe (6) mittig an dem weiteren Horizontal-Element (7) vorgesehen ist.

2. Kameraführungsvorrichtung nach Anspruch 1,
**dadurch gekennzeichnet,**
**dass** die Handhabe (6) im wesentlichen parallel zu der Kamera-Halteplattform (3) verläuft.

3. Kameraführungsvorrichtung nach Anspruch 1 oder 2,
**dadurch gekennzeichnet,**
**dass** die Handhabe (6) mittig über dem Befestigungspunkt (B) des Befestigungsmittels (31) angeordnet ist.

4. Kameraführungsvorrichtung nach einem der vorhergehenden Ansprüche,
**dadurch gekennzeichnet,**
**dass** die Vertikal-Elemente (5) zum Halten der Kameraführungsvorrichtung durch Griffmulden oder einen elastischen Bezug ausgestaltet ist.

5. Kameraführungsvorrichtung nach einem der vorhergehenden Ansprüche,
**dadurch gekennzeichnet,**
**dass** an dem weiteren Horizontal-Element (7) wenigstens eine Gerätehalterung, insbesondere ein Blitzschuh vorgesehen ist.

6. Kameraführungsvorrichtung nach einem der vorhergehenden Ansprüche,
**dadurch gekennzeichnet,**
**dass** insbesondere an der der zu haltenden Kamera angewandten Unterseite der Kamera-Halteplattform (3) ein Stativ-Befestigungsmittel oder ein Eingriff für ein solches zur Zusammenwirkung mit einem Stativ vorgesehen ist.

7. Kameraführungsvorrichtung nach einem der vorhergehenden Ansprüche,
**dadurch gekennzeichnet,**
**dass** das Horizontal-Elemente (4, 41, 42), die Vertikal-Elemente (5, 51, 52) und das weitere Horizontal-Element (7) einen Rahmen um eine auf der Kamera-Halteplattform (3) montierte Kamera herum bilden.

8. Kameraführungsvorrichtung nach einem der vorhergehenden Ansprüche,
**dadurch gekennzeichnet,**
**dass** eine Seiten-Handhabe (8) vorgesehen ist, welche mit einem der Vertikal-Elemente (5) verbunden ist, wobei die Seiten-Handhabe (8) im wesentlichen senkrecht zu der Kamera-Halteplattform (3) verläuft.

9. Kameraführungsvorrichtung nach Anspruch 9,
**dadurch gekennzeichnet,**
**dass** die Seiten-Handhabe (8) über ein feststellbares Gelenk (81) in einer Ebene verschwenkbar ist, zu der die Kamera-Halteplattform (3) im wesentlichen senkrecht verläuft.

10. Kameraführungsvorrichtung nach einem der vorhergehenden Ansprüche,
**dadurch gekennzeichnet,**
**dass** das Befestigungsmittel (31) entlang der Kamera-Halteplattform (3), insbesondere in einem an dieser ausgebildeten Langloch, verschieblich geführt ist, wobei insbesondere das Befestigungsmittel bei Zusammenwirkung mit dem entsprechenden Gegenstück an der Kamera dieses in seiner Position im Langloch (32) festlegt.

11. Kameraführungsvorrichtung nach einem der vorhergehenden Ansprüche,
**dadurch gekennzeichnet,**
**dass** eine abnehmbare Pistolen-Handhabe (9) vorgesehen ist, die an der der Kamera abgewandten Seite der Kamera-Halteplattform (3) oder des Horizontal-Elements (4) befestigbar ist.

12. Kameraführungsvorrichtung nach einem der vorhergehenden Ansprüche,
**dadurch gekennzeichnet,**
**dass** an einem Horizontal-Element (7) ein Zubehörschuh (71) vorgesehen ist, an dem insbesondere ein eine Beleuchtungsvorrichtung befestigt werden kann.

## Claims

1. A camera guide device (1), in particular for a camcorder (2) or a digital camera,
with a camera holding platform (3) for supporting a camera fastenable thereon,
wherein a fastening means (31) is provided at a fastening point (B) at or on the camera holding platform (3) for interaction with a corresponding counterpart piece on the camera,
with a horizontal element (4, 41, 42) protruding from the camera holding platform (3),
wherein the camera holding platform (3) is mounted at the horizontal element (4) displaceably along the same, for adjustment to various geometries and/or centres of gravity of cameras to be mounted, and fastenably on the same,
wherein a handle (6) is provided for guiding the camera guide device,
wherein two vertical elements (5, 51, 52) protrude from this horizontal element (4, 41, 42),
wherein a further horizontal element (7) is provided, which connects both vertical elements (51, 52) to one another, wherein a handle (6) is provided centrally on the further horizontal element (7).

2. The camera guide device according to Claim 1,
**characterised**
**in that** the handle (6) runs essentially parallel to the camera holding platform (3).

3. The camera guide device according to Claim 1 or 2,
**characterised**
**in that** the handle (6) is arranged centrally above the fastening point (B) of the fastening means (31).

4. The camera guide device according to one of the preceding claims,
**characterised**
**in that** the vertical elements (5) for holding the camera guide device is formed by means of handle recesses or an elastic covering.

5. The camera guide device according to one of the preceding claims,
**characterised**
**in that** at least one device holder, particularly a hot shoe is provided on the further horizontal element (7).

6. The camera guide device according to one of the preceding claims,
**characterised**
**in that** a tripod fastening means or an opening for one such for interaction with a tripod is provided in particular on the under side of the camera holding platform (3) applied to the camera to be held.

7. The camera guide device according to one of the preceding claims,
**characterised**
**in that** the horizontal elements (4, 41, 42), the vertical elements (5, 51, 52) and the further horizontal element (7) form a frame around a camera mounted on the camera holding platform (3).

8. The camera guide device according to one of the preceding claims,
**characterised**
**in that** a side handle (8) is provided, which is connected to one of the vertical elements (5), wherein the side handle (8) runs essentially perpendicularly to the camera holding platform (3).

9. The camera guide device according to Claim 9,
**characterised**
**in that** the side handle (8) can be pivoted via a fastenable link (81) in a plane to which the camera holding platform (3) runs essentially perpendicularly.

10. The camera guide device according to one of the preceding claims,
**characterised**
**in that** the fastening means (31) is guided displaceably along the camera holding platform (3), particularly in a slot constructed on the same, wherein, in the case of interaction with the corresponding counterpart piece on the camera, the fastening means fastens the same in its position in the slot (32).

11. The camera guide device according to one of the preceding claims,
**characterised**
**in that** a removable pistol grip (9) is provided, which can be fastened on the side of the camera holding platform (3) or of the horizontal element (4) facing away from the camera.

12. The camera guide device according to one of the preceding claims,
**characterised**
**in that** a cold shoe (71) is provided on a horizontal element (7), on which an illumination device in particular can be fastened.

## Revendications

1. Dispositif de guidage de caméra (1), en particulier pour un caméscope (2) ou une caméra numérique,
comprenant une plate-forme de maintien de caméra (3) pour l'assistance d'une caméra pouvant être fixée dessus,
un moyen de fixation (31) étant prévu pour l'action conjuguée avec une pièce inverse correspondante sur la caméra en un point de fixation (B) près de ou sur la plate-forme de maintien de caméra (3),
un élément horizontal (4, 41, 42) dépassant de la plate-forme de maintien de caméra (3),
la plate-forme de maintien de caméra (3) étant montée sur l'élément horizontal (4) de façon à pouvoir coulisser le long de celui-ci pour s'adapter à différentes géométries et/ou différents centres de gravité de caméras à monter et de façon à pouvoir être fixée sur cet élément,
une manette (6) étant prévue pour le guidage du dispositif de guidage de caméra,
deux éléments verticaux (5, 51, 52) dépassant de cet élément horizontal (4, 41, 42),
un autre élément horizontal (7) étant prévu,
lequel relie les deux éléments verticaux (51, 52) l'un avec l'autre,
une manette (6) étant prévue au centre sur l'autre élément horizontal (7).

2. Dispositif de guidage de caméra selon la revendication 1,
**caractérisé**
**en ce que** la manette (6) est agencée sensiblement parallèlement à la plate-forme de maintien de caméra (3).

3. Dispositif de guidage de caméra selon la revendication 1 ou 2,
**caractérisé**
**en ce que** la manette (6) est disposée au centre au-dessus du point de fixation (B) du moyen de fixation (31).

4. Dispositif de guidage de caméra selon l'une des revendications précédentes,
**caractérisé**
**en ce que** les éléments verticaux (5) pour le maintien du dispositif de guidage de caméra sont conçus par des poignées encastrées ou un recouvrement élastique.

5. Dispositif de guidage de caméra selon l'une des revendications précédentes,
**caractérisé**
**en ce qu'**au moins un support d'appareil, en particulier un sabot pour flash, est prévu sur l'autre élément horizontal (7).

6. Dispositif de guidage de caméra selon l'une des revendications précédentes,
**caractérisé**
**en ce qu'**un moyen de fixation pour pied ou un engagement pour un tel moyen pour l'action conjuguée avec un pied est prévu en particulier sur le côté inférieur, tourné vers la caméra à maintenir, de la plate-forme de maintien de caméra (3).

7. Dispositif de guidage de caméra selon l'une des revendications précédentes,
**caractérisé**
**en ce que** les éléments horizontal (4, 41, 42), les éléments verticaux (5, 51, 52) et l'autre élément horizontal (7) forment un cadre autour d'une caméra montée sur la plate-forme de maintien de caméra (3).

8. Dispositif de guidage de caméra selon l'une des revendications précédentes,
**caractérisé**
**en ce qu'**il est prévu une manette latérale (8), qui est reliée à l'un des éléments verticaux (5), la manette latérale (8) étant disposée sensiblement perpendiculairement à la plate-forme de maintien de caméra (3).

9. Dispositif de guidage de caméra selon la revendication 9,
**caractérisé**
**en ce que** la manette latérale (8) peut basculer au moyen d'une articulation (81) blocable dans un plan, par rapport auquel la plate-forme de maintien de caméra (3) est disposée de façon sensiblement perpendiculaire.

10. Dispositif de guidage de caméra selon l'une des revendications précédentes,
**caractérisé**
**en ce que** le moyen de fixation (31) est guidé de façon coulissante le long de la plate-forme de maintien de caméra (3), en particulier sur un trou oblong formé sur cette plate-forme, sachant qu'en particulier, en cas d'action conjuguée avec la pièce inverse correspondante sur la caméra, le moyen de fixation fixe cette pièce inverse dans sa position dans le trou oblong (32).

11. Dispositif de guidage de caméra selon l'une des revendications précédentes,
**caractérisé**
**en ce qu'**une manette à pistolet (9) amovible est prévue, laquelle peut être fixée sur le côté, opposé à la caméra, de la plate-forme de maintien de caméra (3) ou de l'élément horizontal (4).

12. Dispositif de guidage de caméra selon l'une des revendications précédentes,
**caractérisé**
**en ce que** sur un élément horizontal (7) est prévu un sabot accessoire (71), sur lequel en particulier un dispositif d'éclairage peut être fixé.
